# EUROPEAN PATENT SPECIFICATION

(11) **EP 3 620 325 B1**
(45) Date of publication and mention of the grant of the patent: **16.08.2023**
(21) Application number: 18192893.8
(22) Date of filing: 06.09.2018
(51) Int. Cl.: B60L 53/14, B60L 53/16, B60L 53/18

(54) **POWER PLUG OR POWER SOCKET WITH COUPLING MEANS DETECTING SENSOR**
NETZSTECKER ODER STECKDOSE MIT VERBINDUNGSMITTEL-DETEKTIONSSENSOR
FICHE D'ALIMENTATION OU DOUILLE ÉLECTRIQUE À CAPTEUR DE DÉTECTION DE MOYEN DE COUPLAGE

(43) Date of publication of application: 11.03.2020
(73) Proprietor: Vestel Elektronik Sanayi ve Ticaret A.S., 45030 Manisa (TR)
(72) Inventor: DORAK, Suat, 45030 Manisa (TR)
(74) Representative: Kehl, Ascherl, Liebhoff & Ettmayr Patentanwälte Partnerschaft mbB

(56) References cited:
- DE-B3-102011 001 436
- JP-A- 2014 120 230
- US-A1- 2013 078 840
- US-A1- 2013 337 669
- US-A1- 2014 167 695
- US-A1- 2014 169 865

## Description

### TECHNICAL FIELD

The present invention refers according to claim 1 to a power plug of a charging cable for charging an electric device, according to claim 6 to a cable having at least one of said power plugs, according to claim 8 to a power socket, according to claim 12 to a charging station comprising at least one of said power sockets and according to claim 13 to a method for charging an electric device, in particularly an electric vehicle.

### BACKGROUND

Document US9211799B2 discloses an electric vehicle charging assembly which includes a cord reel, a cord reel locking mechanism, and a master control unit for selectively unlocking the cord reel in response to an authorization signal. The electric vehicle charging assembly monitors the rotational position of the cord reel to prevent unauthorized use, and to record or relay information related to the improper use or malfunction of the electric vehicle charging assembly.

Document DE102011001436B3 discloses a safety device, which has a locking device that is provided to selectively lock or release an electrical plug connector device. A lock detector determines current state of the locking device and provides an electrical signal indicating information about the current locking state. The information containing existence and nature of fault condition is included in the electrical signal, if a disturbance is detected by the lock detector.

Document US2014167695A1 discloses a lock device which locks a locking subject to a power port. The lock device is provided with a lock mechanism including a lock member that is movable between a lock position and an unlock position. The lock mechanism moves the lock member to the lock position to lock the locking subject and moves the lock member to the unlock position to unlock the locking subject. A location registration unit registers, as a registered location, a location where switching of the locking subject between a lock state and an unlock state is prohibited or permitted. A location acquisition unit acquires a present location of the lock device. A switching control unit compares the present location with the registered location and controls the lock mechanism based on the comparison to switch the locking subject between the lock state and the unlock state.

Document US2014169865A1 discloses a lock device. The lock device locks or unlocks a locking subject includes a lock member moved between a lock position where the lock member locks the locking subject and an unlock position where the lock member unlocks the unlocking subject and a movable transmission member that acts to move the lock member to at least the lock position. A guide mechanism is arranged between the transmission member and the lock member. The guide mechanism includes a sloped lock guide surface. The lock guide surface guides the lock member to the lock position when the transmission member moves in a first direction.

According to the standards of electric vehicles, the charging cable must be locked by the socket outlet of a charging station. With this interlock, it is guaranteed that no arcing occurs at the socket outlet of the charging station while electric vehicle is charging. In addition, this interlock prevents charging cable from being stolen. In the market, latching device of interlocks are made of a plastic material. For this reason, the plastic locking apparatus can be broken under extreme forces. An electric vehicle charging station with a broken latching device cannot lock the charging cable properly. Therefore, an arc can be seen at the socket outlet of charging stations or charging cables of users can be stolen. In such a case, charging stations cannot meet charging station standards. Interlocks in the charging station lock charging cables with a motor. These interlocks give the position of the motor as feedback.

### OBJECT OF THE INVENTION

Thus, it is the object of the present invention to enhance safety while charging an electric vehicle.

### SUMMARY OF THE INVENTION

The before mentioned object is solved by a power plug according to claim 1.

The power plug of the present invention is a power plug of a charging cable for charging an electric device, in particular an electric vehicle. The power plug at least comprises multiple contacts for conducting electric energy and/or signals, wherein each contact is linked with an individual wire, a housing for at least partially covering the contacts and/or the wires, wherein the housing comprises a coupling means for locking the contacts in a predefined position in a power socket, wherein the coupling means comprises a sensor element for detecting the predefined position. The housing comprises an inner surface which at least partially surrounds the contacts and/or wires and an outer surface which forms the coupling means, wherein the coupling means is shaped as a latching hole and wherein the sensor element is arranged inside the latching hole. The sensor element is a touch sensor for detecting contact between the power plug and the power socket in case the power plug is positioned into the power socket in the predefined position.

This solution is beneficial since feedback can be provided due to the sensor element whether the coupling means is working fine or has been broken.

Further preferred embodiments are subject-matter of the following specification parts and/or of the dependent claims.

According to a preferred embodiment of the present invention the sensor element outputs signals and/or data, wherein the signals and/or data are transmittable to a control unit of a charging station for activating power supply into the power plug. This embodiment is beneficial since it is possible to detect a damaged coupling means, in case no or wrong signals and/or data are outputted by the sensor element.

The signals and/or data are transmitted via a wireless signal and/or data transfer means, in particular via WiFi or Bluetooth or NFC, or the signals and/or data are transmitted via at least one wire arranged inside the housing. It is possible that the wire connects both ends of a cable. It is alternatively possible that the cable only extends between the sensor element and the nearest or closest end of the cable to which the power plug belongs.

The touch sensor is according to a further preferred embodiment of the present invention additionally configured to detect light changes, pressure changes, tilt changes, changes in a magnetic field and/or current changes.

According to a further preferred embodiment of the present invention, it is also possible that the outer surface of the housing comprises a trench or guiding section via which the coupling means is guided into a predefined coupling position. The trench or guiding section preferably has at least partially a spiral shape.

The before mentioned object is also solved by a cable comprising a plug according to any of the preceding claims. The cable preferably comprises two or exactly two power plugs according to the present invention.

The before mentioned object is also solved by a power socket, in particular for coupling with a power plug according to claim 1. The power socket preferably comprises multiple socket contacts for conducting electric energy and/or signals, wherein each socket contact is linked with an individual socket wire, a socket housing for at least partially covering the socket contacts and/or the socket wires, wherein the socket housing comprises a socket coupling means for locking contacts of the power plug in the predefined position, wherein the socket coupling means comprises a socket sensor element for detecting the predefined position. The socket housing comprises an inner surface which at least partially surrounds the socket contacts and which forms the socket coupling means, wherein the socket coupling means is shaped as a protruding element, in particular a rod or trunnion or pin or projection, and wherein the socket sensor element is arranged on the protruding element. The socket sensor element is a touch sensor for detecting contact between the power plug and the power socket in case the power plug is positioned into the power socket in the predefined position. This embodiment is beneficial since the coupling means can be provided as part of the power socket and not necessarily as part of the power plug. This embodiment is also beneficial since the socket sensor element is positioned in such a manner that the sensor element is only triggered in case a counter element of the power plug contacts the socket sensor element.

The socket sensor element outputs according to a further preferred embodiment of the present invention signals and/or data, wherein the signals and/or data are transmittable to a control unit, in particular of a charging station, for activating power supply into the power plug. This embodiment is beneficial since the control unit only starts charging after at least the sensor signals and/or sensor data are received and/or analyzed.

The signals and/or data are transmitted via a wireless signal and/or data transfer means of the socket, in particular via WiFi or Bluetooth or NFC, or the signals and/or data are transmitted via a wire arranged inside the socket housing. This embodiment is beneficial since the socket can be wirelessly connected to the control unit.

The touch sensor is according to a further preferred embodiment of the present invention additionally configured to detect light changes, pressure changes, tilt changes, changes in a magnetic field and/or current changes.

According to a further preferred embodiment of the present invention, it is also possible that the protruding element, in particular latch or pin, can be moved, in particular in a radial direction. Movements of the protruding element are preferably carried out by means of an actuator, in particular an electric motor. This embodiment is beneficial since the cable can be manufactured without a sensor element, since the power socket comprises the sensor element. The sensor element is preferably a touch sensor, in particularly a conductive element or a pressure measuring element.

The before mentioned object is further solved by a charging station. Said charging station comprises at least one power socket and preferably at least multiple power sockets according to any of claims 5 to 7.

The before-mentioned object is further solved by a method for charging an electric device, in particular an electric vehicle. The method according to the present invention preferably comprises at least the steps: Providing a power socket having a socket coupling means for arranging a power plug of a cable in a predefined position, wherein the cable connects the power plug with an electric device, in particular an electric vehicle, providing the power plug as hereinbefore described, wherein the socket coupling means and/or the coupling means of the power plug each comprises a respective sensor element, inserting the power plug into the power socket, outputting signals and/or data in case the power plug and the power socket are arranged with respect to each other in a predefined position, and starting charging. The control unit preferably detects and/or analyzes the signals and/or data. The predefined position is a position in which the power plug is arranged in such a manner on or inside the power socket that electric energy can be transmitted. The charging station controls or evaluates interlock feedback before charging starts or a charging state is registered. The station preferably starts charging in case high logic level feedback is present. The sensor element outputs low logic level in case the socket coupling means is broken or is unlocked. High logic level occurs or is present in case the locking is successfully carried out.

### BRIEF DESCRIPTION OF THE DRAWINGS

For a more complete understanding of the present invention and advantages thereof, reference is now made to the following description taken in conjunction with the accompanying drawings. The invention is explained in more detail below using an exemplary embodiment which is specified in the schematic figures of the drawings, in which:
- Fig. 1: shows an example of a first arrangement according to the present invention, wherein a sensor element is part of a latch or attached thereto,
- Fig. 2: shows an example of a second arrangement according to the present invention, wherein a sensor element is part of a latch hole or attached thereto, and
- Fig. 3: shows an example of a flow chart about a preferred sequence according to the present invention.

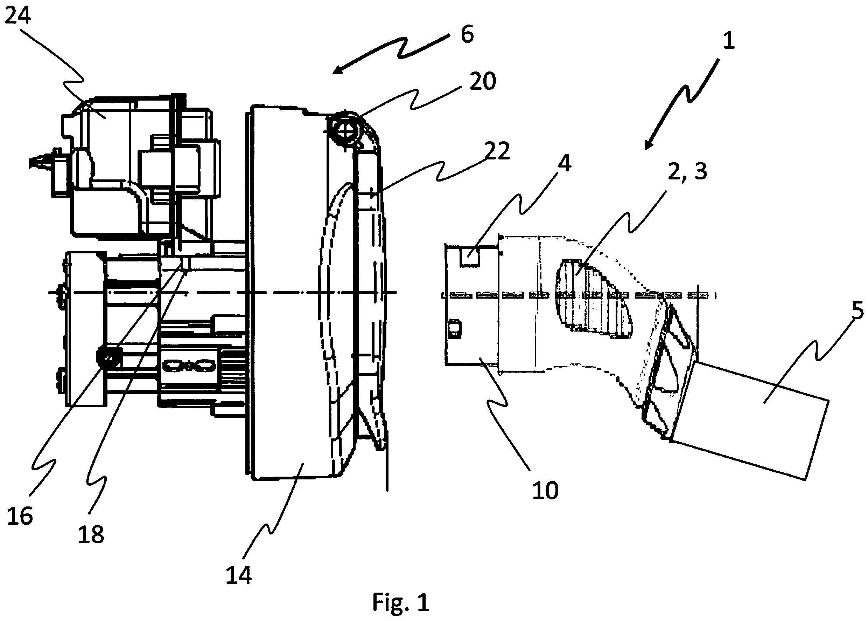

Fig. 1 of the present invention shows a power plug 1 which is connected to a cable 5 or which provides a cable 5. The cable 5 preferably comprises multiple wires, in particular electrically shielded wires. Reference number 2 refers to a housing of power plug 1 and reference number 3 refers to a grip which is preferably formed by sections of the housing. A surface section of power plug 1 forms or comprises a coupling means 4. The coupling means 4 is preferably used to set-up a form closure with power socket 6, or with a socket coupling means 16. The power socket 6 preferably comprises at least multiple socket contacts for conducting electric energy and/or signals, wherein each socket contact is linked with an individual socket wire, a socket housing 14 for at least partially covering the socket contacts and/or the socket wires. Thus, the socket housing 14 preferably comprises the socket coupling means 16, in particular socket latching means, for locking, in particular latching, contacts of the power plug 1 in a predefined position, wherein the socket coupling means 16 comprises a socket sensor element 18, in particular a touch sensor, for detecting the predefined position. Reference number 24 refers to an actuating means for moving the socket coupling means 16 from an unlocked position into a locked position and vice versa.

The socket housing 14 preferably comprises an inner surface which at least partially surrounds the socket contacts and which forms the socket coupling means 16. The socket coupling means 16 is preferably shaped as a protruding element, in particular rod or trunnion or pin or projection. The socket sensor element 18 is preferably arranged on the protruding element.

Reference number 20 preferably identifies a joint which couples a lid 22 to a housing of the power socket 6.

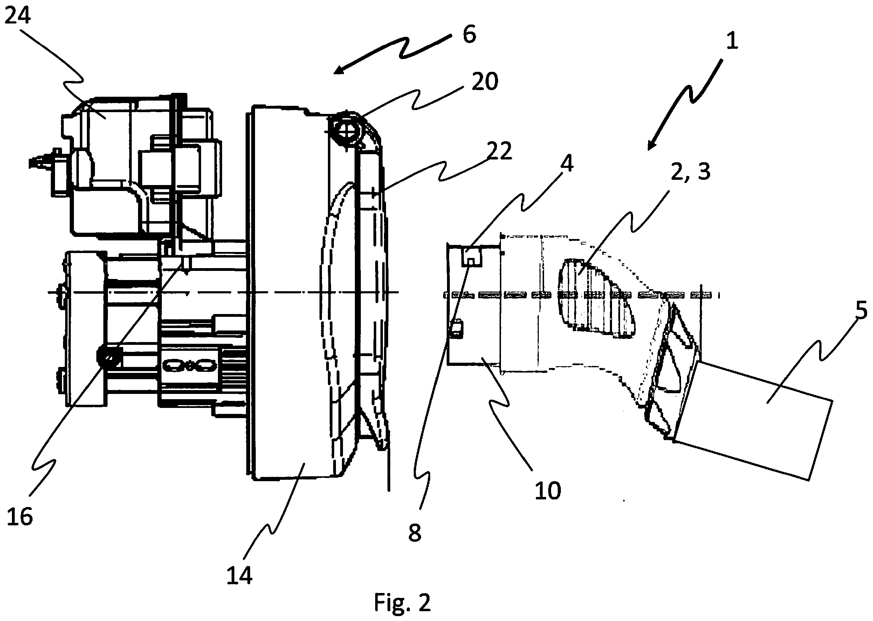

Fig. 2 shows an embodiment, which is similar to the one shown in Fig 1. However, the sensor element 8 is arranged inside the coupling means 4 or as part of coupling means 4.

The present invention therefore also refers to a power plug 1 of a charging cable for charging an electric device, in particular an electric vehicle. The power plug 1 preferably comprises at least multiple contacts for conducting electric energy and/or signals, wherein each contact is linked with an individual wire, a housing 2 for at least partially covering the contacts and/or the wires, wherein the housing 2 comprises a coupling means 4, in particular latching means, for locking, in particular latching, the contacts in a predefined position in a power socket 6, wherein the coupling means 4 comprises a sensor element 8 for detecting the predefined position.

The housing 2 preferably comprises an inner surface which at least partially surrounds the contacts and/or wires and an outer surface 10 which forms the coupling means. The coupling means 4 is preferably shaped as a latching hole. The sensor element 8 is preferably arranged inside the latching hole.

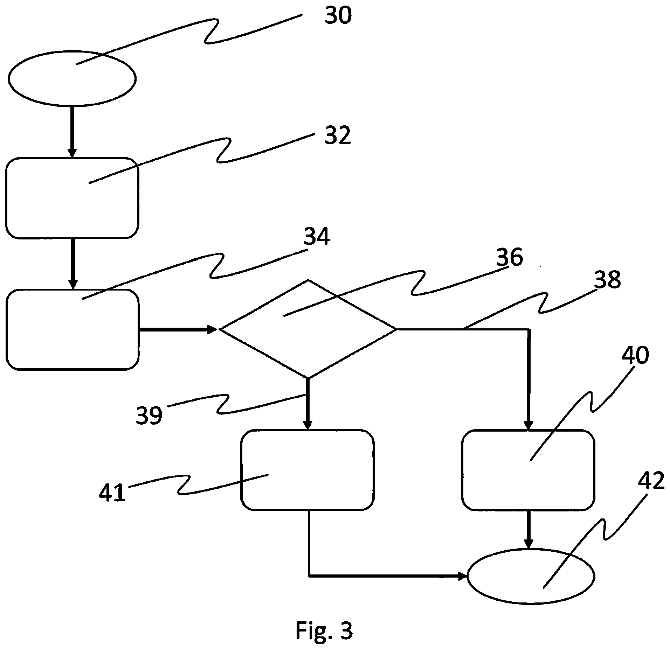

Fig. 3 shows an example of a flow chart according to a method of the present invention.

The method starts with reference number 30. According to reference number 32 a step of connecting the charging cable to an electric vehicle takes place. In step 34 the locking apparatus is controlled. It is checked in step 36 if the sensor is activated. In case the sensor is activated (reference number 38) charging starts (reference number 40). In case the sensor is not activated (reference number 39) an error message is sent (e.g. "do not start charging") (cf. reference number 41). After step 40 or step 41 the method ends (cf. reference number 42).

### LIST OF REFERENCE NUMBERS

- 1: power plug
- 2: housing
- 3: grip
- 4: coupling means
- 5: cable
- 6: power socket
- 8: sensor element
- 10: outer surface
- 14: socket housing
- 16: socket coupling means
- 18: socket sensor element
- 20: joint
- 22: lid
- 24: actuator
- 30: start
- 32: connecting the charging cable to electric vehicle
- 34: control the locking apparatus
- 36: is sensor activated
- 38: yes
- 39: no
- 40: start the charging
- 41: send error message - do not start charging
- 42: end

## Claims

1. Power plug (1) of a charging cable for charging an electric device, in particular an electric vehicle, the power plug at least comprising:
multiple contacts for conducting electrical energy and/or signals, wherein each contact is linked with an individual wire,
a housing (2) for at least partially covering the contacts and/or the wires,
wherein the housing (2) comprises a coupling means (4) for locking the contacts in a predefined position in a power socket (6),
wherein the coupling means (4) comprises a sensor element (8) for detecting the predefined position,
**characterized in that**:
the housing (2) comprises an inner surface which at least partially surrounds the contacts and/or wires and an outer surface (10) which forms the coupling means, wherein the coupling means (4) is shaped as a latching hole and wherein the sensor element (8) is arranged inside the latching hole; and
the sensor element (8) is a touch sensor for detecting contact between the power plug (1) and the power socket (6) in case the power plug is positioned into the power socket in the predefined position.

2. Plug according to claim 1, **characterized in that**:
the sensor element (8) outputs signals and/or data, wherein the signals and/or data are transmittable to a control unit of a charging station for activating power supply into the power plug;
wherein the signals and/or data are transmitted via a wireless signal and/or data transfer means, in particular via WiFi or Bluetooth or NFC,
or
the signals and/or data are transmitted via a wire arranged inside the housing (2).

3. Plug according to any of the preceding claims, **characterized in that**:
the touch sensor is additionally configured to detect light changes, pressure changes, tilt changes, changes in a magnetic field and/or current changes.

4. Cable (12) comprising a plug according to any of the preceding claims.

5. Power socket (6) for coupling with the power plug according to claim 1, the power socket at least comprising:
multiple socket contacts for conducting electric energy and/or signals, wherein each socket contact is linked with an individual socket wire,
a socket housing (14) for at least partially covering the socket contacts and/or the socket wires,
wherein the socket housing (14) comprises a socket coupling means (16) for locking contacts of the power plug (1) in the predefined position,
wherein the socket coupling means (16) comprises a socket sensor element (18) for detecting the predefined position,
**characterized in that**:
the socket housing (14) comprises an inner surface which at least partially surrounds the socket contacts and which forms the socket coupling means (16), wherein the socket coupling means (16) is shaped as a protruding element, in particular a rod or trunnion or pin or projection, and wherein the socket sensor element (18) is arranged on the protruding element; and
the socket sensor element (18) is a touch sensor for detecting contact between the power plug and the power socket in case the power plug is positioned into the power socket in the predefined position.

6. Socket according to claim 5, **characterized in that**:
the socket sensor element (18) outputs signals and/or data, wherein the signals and/or data are transmittable to a control unit of a charging station for activating power supply into the power plug;
wherein the signals and/or data are transmitted via a wireless signal and/or data transfer means of the socket, in particular via WiFi or Bluetooth or NFC,
or
the signals and/or data are transmitted via a wire arranged inside the socket housing (14).

7. Socket according to claim 5 or claim 6, **characterized in that**:
the touch sensor is additionally configured to detect light changes, pressure changes, tilt changes, changes in a magnetic field and/or current changes.

8. Charging station comprising at least one power socket according to any of claims 5 to 7.

9. Method for charging an electric device, in particular an electric vehicle, the method at least comprising:
providing a power socket (6) having a socket coupling means (4) for arranging a power plug (1) of a cable (6) in a predefined position, wherein the cable (6) connects the power plug with an electric device, in particular an electric vehicle,
providing the power plug (1) according to claim 1,
wherein the socket coupling means (16) and/or the coupling means (4) of the power plug each comprises a respective sensor element (8, 18),
inserting the power plug (1) into the power socket (6),
outputting signals and/or data in case the power plug (1) and the power socket (6) are arranged with respect to each other in a predefined position, and
starting charging.

## Patentansprüche

1. Netzstecker (1) eines Ladekabels zum Laden einer elektrischen Vorrichtung, insbesondere eines Elektrofahrzeugs, wobei der Netzstecker zumindest aufweist:
mehrere Kontakte zum Leiten von elektrischer Energie und/oder Signalen, wobei jeder Kontakt mit einem einzelnen Draht verbunden ist,
ein Gehäuse (2) zur zumindest teilweisen Abdeckung der Kontakte und/oder der Drähte,
wobei das Gehäuse (2) ein Kopplungsmittel (4) zum Verriegeln der Kontakte in einer vordefinierten Position in einer Steckdose (6) aufweist,
wobei das Kopplungsmittel (4) ein Sensorelement (8) zum Erfassen der vordefinierten Position aufweist,
**dadurch gekennzeichnet, dass**:
das Gehäuse (2) eine Innenfläche aufweist, die die Kontakte und/oder Drähte zumindest teilweise umgibt, und eine Außenfläche (10), die das Kupplungsmittel bildet, wobei das Kupplungsmittel (4) als Rastloch ausgebildet ist und wobei das Sensorelement (8) innerhalb des Rastlochs angeordnet ist; und
das Sensorelement (8) ein Berührungssensor zum Erfassen eines Kontakts zwischen dem Netzstecker (1) und der Netzsteckdose (6) ist, wenn der Netzstecker in der vordefinierten Position in der Netzsteckdose positioniert ist.

2. Stecker gemäß Anspruch 1, **dadurch gekennzeichnet, dass**:
das Sensorelement (8) Signale und/oder Daten ausgibt, wobei die Signale und/oder Daten an eine Steuereinheit einer Ladestation zur Aktivierung der Stromzufuhr in den Netzstecker übertragbar sind;
wobei die Signale und/oder Daten über ein drahtloses Signal- und/oder Datenübertragungsmittel, insbesondere über WiFi oder Bluetooth oder NFC, übertragen werden,
oder
die Signale und/oder Daten über eine innerhalb des Gehäuses (2) angeordnete Leitung übertragen werden.

3. Stecker gemäß einem der vorhergehenden Ansprüche, **dadurch gekennzeichnet, dass**:
der Berührungssensor zusätzlich konfiguriert ist, um Lichtänderungen, Druckänderungen, Neigungsänderungen, Änderungen eines Magnetfeldes und/oder Stromänderungen zu erfassen.

4. Kabel (12), das einen Stecker gemäß einem der vorangehenden Ansprüche aufweist.

5. Steckdose (6) zur Kopplung mit dem Netzstecker gemäß Anspruch 1, wobei die Steckdose mindestens aufweist:
mehrere Buchsenkontakte zum Leiten von elektrischer Energie und/oder Signalen, wobei jeder Buchsenkontakt mit einer individuellen Buchsenleitung verbunden ist,
ein Buchsengehäuse (14) zur zumindest teilweisen Abdeckung der Buchsenkontakte und/oder der Buchsendrähte,
wobei das Buchsengehäuse (14) eine Buchsenkupplungseinrichtung (16) zum Verriegeln von Kontakten des Netzsteckers (1) in der vorbestimmten Position aufweist,
wobei das Buchsenkopplungsmittel (16) ein Buchsensensorelement (18) zum Erfassen der vordefinierten Position aufweist,
**dadurch gekennzeichnet, dass**:
das Buchsengehäuse (14) eine die Buchsenkontakte zumindest teilweise umgebende Innenfläche aufweist, die das Buchsenkopplungsmittel (16) bildet, wobei das Buchsenkopplungsmittel (16) als vorstehendes Element, insbesondere als Stab oder Zapfen oder Stift oder Vorsprung, ausgebildet ist, und wobei das Buchsensensorelement (18) an dem vorstehenden Element angeordnet ist; und
das Steckdosensensorelement (18) ein Berührungssensor zum Erfassen eines Kontakts zwischen dem Netzstecker und der Netzsteckdose ist, wenn der Netzstecker in der vordefinierten Position in der Netzsteckdose positioniert ist.

6. Steckdose gemäß Anspruch 5, **dadurch gekennzeichnet, dass**:
das Steckdosensensorelement (18) Signale und/oder Daten ausgibt, wobei die Signale und/oder Daten an eine Steuereinheit einer Ladestation zur Aktivierung der Stromzufuhr in den Netzstecker übertragbar sind;
wobei die Signale und/oder Daten über ein drahtloses Signal- und/oder Datenübertragungsmittel der Steckdose, insbesondere über WiFi oder Bluetooth oder NFC, übertragen werden,
oder
die Signale und/oder Daten über eine im Inneren des Steckdosengehäuses (14) angeordnete Leitung übertragen werden.

7. Steckdose gemäß Anspruch 5 oder Anspruch 6, **dadurch gekennzeichnet, dass**:
der Berührungssensor zusätzlich konfiguriert ist, um Lichtänderungen, Druckänderungen, Neigungsänderungen, Änderungen eines Magnetfeldes und/oder Stromänderungen zu erfassen.

8. Ladestation, die mindestens eine Steckdose gemäß einem der Ansprüche 5 bis 7 aufweist.

9. Verfahren zum Laden einer elektrischen Vorrichtung, insbesondere eines Elektrofahrzeugs, wobei das Verfahren zumindest aufweist:
Vorsehen einer Steckdose (6) mit einer Steckdosenkupplungseinrichtung (4) zum Anordnen eines Netzsteckers (1) eines Kabels (6) in einer vorgegebenen Position, wobei das Kabel (6) den Netzstecker mit einer elektrischen Vorrichtung, insbesondere einem Elektrofahrzeug, verbindet,
Vorsehen des Netzsteckers (1) gemäß Anspruch 1,
wobei das Buchsenkupplungsmittel (16) und/oder das Kupplungsmittel (4) des Netzsteckers jeweils ein Sensorelement (8, 18) aufweist,
Einstecken des Netzsteckers (1) in die Netzsteckdose (6),
Ausgeben von Signalen und/oder Daten, wenn der Netzstecker (1) und die Netzsteckdose (6) in einer vordefinierten Position zueinander angeordnet sind, und
Starten des Ladevorgangs.

## Revendications

1. Fiche d'alimentation (1) d'un câble de charge pour charger un appareil électrique, en particulier un véhicule électrique, la fiche d'alimentation comprenant au moins :
de multiples contacts pour conduire l'énergie électrique et/ou les signaux, chaque contact étant relié à un fil individuel,
un boîtier (2) destiné à recouvrir au moins partiellement les contacts et/ou les fils,
dans lequel le boîtier (2) comprend un moyen de couplage (4) pour verrouiller les contacts dans une position prédéfinie dans une prise de courant (6),
dans lequel le moyen de couplage (4) comprend un élément capteur (8) pour détecter la position prédéfinie,
**caractérisé par le fait que** :
le boîtier (2) comprend une surface intérieure qui entoure au moins partiellement les contacts et/ou les fils et une surface extérieure (10) qui forme le moyen de couplage, dans lequel le moyen de couplage (4) a la forme d'un trou de verrouillage et dans lequel l'élément capteur (8) est disposé à l'intérieur du trou de verrouillage ; et
l'élément capteur (8) est un capteur tactile qui détecte le contact entre la fiche d'alimentation (1) et la prise d'alimentation (6) lorsque la fiche d'alimentation est placée dans la prise d'alimentation dans la position prédéfinie.

2. Fiche selon la revendication 1, **caractérisée en ce que** :
l'élément capteur (8) émet des signaux et/ou des données, les signaux et/ou les données étant transmis-tables à une unité de commande d'une station de charge pour activer l'alimentation électrique dans la prise de courant ;
les signaux et/ou les données sont transmis via un signal sans fil et/ou des moyens de transfert de données, en particulier via WiFi, Bluetooth ou NFC,
ou
les signaux et/ou les données sont transmis par l'intermédiaire d'un câble placé à l'intérieur du boîtier (2).

3. Fiche selon l'une quelconque des revendications précédentes, **caractérisée en ce que** :
le capteur tactile est en outre configuré pour détecter des variations de lumière, des variations de pression, des variations d'inclinaison, des variations de champ magnétique et/ou des variations de courant.

4. Câble (12) comprenant une fiche selon l'une quelconque des revendications précédentes.

5. Prise de courant (6) pour le couplage avec la fiche de courant selon la revendication 1, la prise de courant comprenant au moins :
des contacts de prise multiples pour conduire l'énergie électrique et/ou les signaux, chaque contact de prise étant relié à un fil de prise individuel,
un boîtier de prise (14) pour recouvrir au moins partiellement les contacts de prise et/ou les fils de prise,
dans lequel le boîtier de prise (14) comprend un moyen de couplage de prise (16) pour verrouiller les contacts de la fiche d'alimentation (1) dans la position prédéfinie,
dans lequel le moyen de couplage de la prise (16) comprend un élément capteur de prise (18) pour détecter la position prédéfinie,
**caractérisé par le fait que** :
le boîtier de la prise (14) comprend une surface intérieure qui entoure au moins partiellement les contacts de la prise et qui forme le moyen de couplage de la prise (16), dans lequel le moyen de couplage de la prise (16) a la forme d'un élément en saillie, en particulier une tige ou un tourillon ou une goupille ou une saillie, et dans lequel l'élément de détection de la prise (18) est disposé sur l'élément en saillie ; et
l'élément capteur de la prise (18) est un capteur tactile qui détecte le contact entre la fiche électrique et la prise lorsque la fiche électrique est placée dans la prise dans la position prédéfinie.

6. Prise selon la revendication 5, **caractérisée en ce que** :
l'élément capteur de la prise (18) émet des signaux et/ou des données, les signaux et/ou les données pouvant être transmis à une unité de commande d'une station de charge pour activer l'alimentation électrique dans la prise de courant ;
les signaux et/ou les données sont transmis via un signal sans fil et/ou des moyens de transfert de données de la prise, en particulier via WiFi, Bluetooth ou NFC,
ou
les signaux et/ou les données sont transmis par l'intermédiaire d'un câble placé à l'intérieur du boîtier de la prise (14).

7. Prise selon la revendication 5 ou la revendication 6, **caractérisée en ce que** :
le capteur tactile est en outre configuré pour détecter des changements de lumière, des changements de pression, des changements d'inclinaison, des changements de champ magnétique et/ou des changements de courant.

8. Station de charge comprenant au moins une prise de courant selon l'une quelconque des revendications 5 à 7.

9. Procédé de charge d'un dispositif électrique, notamment d'un véhicule électrique, la méthode comprenant au moins :
fournir une prise de courant (6) ayant un moyen de couplage de prise (4) pour arranger une fiche de courant (1) d'un câble (6) dans une position prédéfinie, dans laquelle le câble (6) connecte la fiche de courant avec un appareil électrique, en particulier un véhicule électrique,
en fournissant la fiche d'alimentation (1) selon la revendication 1,
dans laquelle le moyen de couplage de la prise (16) et/ou le moyen de couplage (4) de la fiche d'alimentation comprend chacun un élément capteur respectif (8, 18),
insérer la fiche d'alimentation (1) dans la prise de courant (6),
émettre des signaux et/ou des données lorsque la fiche d'alimentation (1) et la prise de courant (6) sont disposées l'une par rapport à l'autre dans une position prédéfinie, et
démarrer la charge.
